(19) Europäisches Patentamt
European Patent Office
Office européen des brevets

(11) EP 0 492 405 B1

(12) **EUROPÄISCHE PATENTSCHRIFT**

(45) Veröffentlichungstag und Bekanntmachung des Hinweises auf die Patenterteilung:
**04.09.1996 Patentblatt 1996/36**

(51) Int. Cl.$^6$: **C08F 265/06**

(21) Anmeldenummer: **91121714.9**

(22) Anmeldetag: **18.12.1991**

(54) **Acrylat-Methacrylat-Propfpolymerisate**

Graft copolymers from acrylate and methylacrylate

Polymères greffés d'acrylate et méthacrylate

(84) Benannte Vertragsstaaten:
**AT BE CH DE DK ES FR GB IT LI NL SE**

(30) Priorität: **22.12.1990 DE 4041525**

(43) Veröffentlichungstag der Anmeldung:
**01.07.1992 Patentblatt 1992/27**

(73) Patentinhaber: **RÖHM GMBH**
**D-64293 Darmstadt (DE)**

(72) Erfinder:
- **Siol, Werner, Dr.**
  **W-6100 Darmstadt (DE)**
- **Klesse, Wolfgang, Dr.**
  **W-5600 Mainz 31 (DE)**
- **Koralewsky, Klaus**
  **W-6086 Riedstadt (DE)**
- **Terbrack, Ulrich**
  **W-6107 Reinheim 2 (DE)**

(56) Entgegenhaltungen:
**EP-A- 0 357 036**
**DE-A- 3 708 427**
**GB-A- 975 421**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 492 405 B1

Printed by Rank Xerox (UK) Business Services
2.13.4/3.4

## Beschreibung

Gebiet der Erfindung

Die Erfindung betrifft Acrylat-Methacrylat-Pfropfpolymerisate, die als thermoformbare Werkstoffe dienen und die daraus hergestellten Formkörper sowie Emulsionspolymerisate auf der Basis von Acrylat-Methacrylat-Pfropfpolymerisaten und daraus hergestellte Filme und Folien. Die Produkte zeichnen sich u.a. durch sehr gute Tieftemperaturzähigkeit, günstiges Blockverhalten und hohe Kohäsion aus.

Stand der Technik

Acrylat-Methacrylat-Pfropfpolymere haben insbesondere als Schlagzähmodifier für thermoplastisch verarbeitbare Formmassen breite technische Anwendung erlangt (siehe beispielsweise GB-P 975 421).
Derartige Schlagzähmodifier auf Acrylat-Basis werden in aller Regel nach den Verfahren der Emulsionspolymerisation hergestellt, wobei in einer ersten Reaktionsstufe eine Acrylsäureester-Vernetzer-Mischung zu einem vernetzten Polyacrylsäureester-Latex-Teilchen polymerisiert wird und in einer zweiten Verfahrensstufe auf dieses vernetzte Teilchen eine harte Schale aus Polyalkylmethacrylat, meist PMMA, aufgepfropft wird. In der Regel dient die harte Polymethacrylatschale zur besseren Handhabung der weiteren Acrylatelastomeren und zur Anbindung der Polyacrylatteilchen an die zu modifizierenden Kunststoffe, meist PVC, da PMMA und PVC gut verträglich sind und somit beispielsweise ein Butylacrylat-Gummi über das auf den Butylacrylat-Gummi gepfropfte PMMA gut an das PVC angebunden werden kann.

Durch entsprechende Variation der harten Polymethacrylat-Schale des Latex-Teilchens können auch andere Kunststoffe schlagzäh modifiziert werden, beispielsweise können durch Aufpfropfen einer Methylmethacrylat-Cyclohexylmethacrylat-Copolymer-Schale auf einen Acrylat-Gummi, eine ganze Reihe von Kunststoffen schlagzäh modifiziert werden, da dieses Methylmethacrylat-Cycloherylmethacrylat-Copolymere mit einer ganzen Reihe von Kunststoffen (z.B. PVC, Polystyrol, PMMA) verträglich ist (siehe EP 312 878).
Besonders ausgefeilt sind die Vernetzungssysteme der Acrylelastomeren, wobei häufig eine Kombination von Vernetzern (Butylenglykoldiacrylat) und Pfropfvernetzern (z.B. Allylmethacrylat) eingesetzt wird (vgl. DE-OS 21 16 653).
Häufig wird auch der Brechungsindex der Polyacrylat-Elastomerphase durch Copolymerisation mit Styrol an den Brechungsindex der PMMA-Phase angepaßt, um gute optische Eigenschaften der schlagzähmodifizierten Polymermischungen zu erhalten (siehe beispielsweise EP 113 924).

Besonderer Wert wird im allgemeinen auf eine gute Vernetzung des Acrylat-Elastomeren gelegt, wobei diese Vernetzung häufig durch den Gelkörpergehalt oder den maximalen Quellungsgrad charakterisiert wird. (Japan. Kokai 7624, 689, CA 85: 47521 r (1976)).

In einigen Fällen werden auch Butadien und andere gut pfropfbare Monomere copolymerisiert, um einerseits gut vernetzte Gummi-Teilchen und andererseits eine gute Methacrylat-Pfropfung zu erreichen.

Ebenso werden reaktive Gruppen zur Verbesserung der Pfropfung von Polymethacrylat und Polyacrylat eingesetzt, hier werden vor allem Epoxid-Gruppen, beispielsweise Glycidylmethacrylat, Methylolgruppen, beispielsweise Methylolmethacrylamid, Maleinsäureanhydrid, Isocyanatoethylmethacrylat und andere mit nucleophilen Gruppen umsetzbare Verbindungen genannt.
Auch der Einsatz von harter Strahlung zur Verbesserung der Pfropfung der Methacrylate auf vorgegebene Acrylate wird beschrieben.

Ein anderer Ansatz zur Erzielung gut gepfropfter Acrylat/Methacrylat-Systeme ist in Arbeiten zu sehen, die durch einen mehrstufigen Polymerisationsprozeß mit einem stufenweisen Übergang von einem Acrylat zu einem Methacrylat versuchen, die Pfropfung der Methacrylate auf die Acrylate zu verbessern.
Beispielsweise wird in US 877 847 eine Dispersion beschrieben mit einer

| | |
|---|---|
| 1. Stufe aus 99 % | $C_{1-2}$ Alkylacrylat und 1 % Butylendiacrylat und einer |
| 2. Stufe aus 60 % | Methylmethacrylat und 40 % (M)ethylacrylat und einer |
| 3. Stufe aus 90 % | Methylmethacrylat und 10 % (M)ethylacrylat oder Methoxyethylacrylat und einer |
| 4. Stufe aus einer 90 : | 2-Mischung MMA und Methylacrylat oder Methoxyethylacrylat mit 4 % Methacrylsäure bezogen auf die Mischung |

Ebenso wird in Japan. Kokai 7864 228 (CA: 89: 147 576 p) ein Acrylatfilm beschrieben, in dem eine

| | |
|---|---|
| 1. Stufe aus 90 % | Butylacrylat und 10 % MMA und 0,5 % Triallylcyanurat als Vernetzer enthaltende Mischung mit einer |
| 2. Stufe aus 50 % | MMA und 50 % Butylacrylat und schließlich einer |
| 3. Stufe aus 10 % | Butylacrylat und 90 % MMA umgesetzt wird. |

Ähnlich wird in Japan. Kokai 7733,991 (CA: 87: 54303r) vorgegangen.

In der EP-A-56 242, (DE-Appln 31 00 748) wird ein Elastomer-Pulver beschrieben, hergestellt durch Pfropfpolymerisation von einem Butylacrylat-Latex mit Methylmethacrylat.

Elastomere, d.h. Materialien die sich durch Einwirkung einer geringfügigen Kraft bei Raumtemperatur und darüber um mindestens das Doppelte ihrer Ausgangslänge dehnen lassen und nach Aufhebung des Zwangs wieder rasch und praktisch vollständig in die ursprüngliche Form zurückkehren, haben vielfältige Anwendungsmöglichkeiten in der Technik gefunden. Als besonders interessante Gruppe müssen thermoplastisch verarbeitbare Elastomere gelten.

Thermoplastische Elastomere stellen üblicherweise mehrphasige Systeme dar, bei denen sich die Phasen in inniger Dispersion befinden. Vielfach sind die Phasen dabei durch Pfropf- oder Blockpolymerisation verbunden. (Vgl. H.F. Mark et al., Encyclopedia of Polymer Science & Technology, Vol. 5, 416 - 430, J. Wiley 1986). Konzeptionell wird dabei vorausgesetzt, daß mindestens eine Hartphase vorliegt, die sich beim Erhitzen verflüssigen läßt und eine weiche Phase, die sich bei Raumtemperatur gummiartig verhält. Liegen bei Schlagzähmodifiern in der Regel feine, vernetzte Gummi-Teilchen in einer harten Matrix vor, zeigen die thermoplastischen Elastomere im allgemeinen eine durchgehende Gummiphase mit eingelagerten harten "Vernetzungs"domänen. Während die in der Technik hauptsächlich verwendeten thermoplastischen Elastomere vorwiegend Blockcopolymere mit harten Systemen aus Polystyrol, Polysulfon, Polyester, Polyurethan oder Polycarbonat und "weicheren" Segmenten aus Polyolefinen, Polysiloxan oder Polyether darstellen, werden in der EP-A 0 381 065 Elastomere auf Acrylatbasis vorgeschlagen, die zu mindestens 40 Gew.-% aus Copolymerisaten mit einem Molekulargewicht > 50 000 Dalton bestehen, die zu 50 - 95 Gew.-% aufgebaut sind aus $\alpha$) Acrylatmonomeren und im übrigen aus $\beta$) Makromonomeren bestehend aus vinylischen Gruppen und damit kovalent verbunden einer Polyvinyleinheit, ausgewählt aus der Gruppe der Acrylate und Methacrylate mit einer Glastemperatur Tg von mindestens 60 Grad C und einem Molekulargewicht von 500 - 100 000 Dalton.

Die bereits eingangs erwähnte GB-A 975,421 bedient sich zwar ebenfalls des Verfahrens der Pfropfpolymerisation mittels Emulsionspolymerisation, aber sie schenkt dem Problem der Polymerverträglichkeit nicht die geringste Aufmerksamkeit. Keines der ausgeführten Beispiele genügt z.B. den Kriterien der vorliegenden Erfindung.

## Aufgabe und Lösung

Kammpolymere mit einer Polybutylacrylat-Hauptkette und Seitenketten aus Polymethylmethacrylat-Makromonomeren zeigen beispielsweise das von Styrol-Butadien-Styrol-Dreiblockcopolymeren her geläufige Eigenschaftsbild thermoplastisch verarbeitbarer Elastomerer (TPE).

So interessant sich derartige Makromonomer-Kammpolymere hinsichtlich ihrer Eigenschaften auch darstellen, so kann man doch nicht darüber hinwegsehen, daß sie sehr spezielle Produkte einer relativ aufwendigen Technologie sind und voraussichtlich bleiben werden.

Es bestand daher die Aufgabe thermoplastisch verarbeitbare Elastomere aus den gleichen Monomergruppen mit vergleichbar guten Gebrauchs- und Verarbeitungseigenschaften zur Verfügung zu stellen, deren Herstellung mit geringerem technologischen Aufwand verbunden sein sollte als beispielsweise bei den genannten Kammpolymeren.

Eine gewisse qualitative Annäherung an die oben geschilderten Kammpolymere hätte man vielleicht noch am ehesten von der Methodik der Pfropfpolymerisation erwarten können, nachdem sich bei den Untersuchungen der Anmelderin gezeigt hatte, daß das Gesamteigenschaftsbild der Kammpolymeren relativ unempfindlich ist gegenüber nicht an die Kammpolymeren gebundenes Polymethylmethacrylat.

Der Weg über Pfropfpolymerisation zu thermoplastisch verarbeitbaren Elastomeren auf Acrylatbasis zu kommen, schien zunächst insofern verschlossen, als es sich herausstellte, daß selbst unter idealen Pfropfbedingungen (Zulaufpolymerisation, Abwesenheit übertragungsaktiver Lösungsmittel und Hilfsstoffe) keine Pfropfpolymerisate erhalten werden, die bei gleicher Zusammensetzung auch nur im entferntesten das Eigenschaftsbild der genannten Butylacrylat-Methylmethacrylat-Makromonomer-Kammpolymeren erreichen (wie z.B. Reißfestigkeit mit $\sigma_R$ = 10 MPa; Reißdehnung $\varepsilon_R$ = 400 % u.ä.).

Die so erhaltenen Polymeren waren vielmehr klebrig, zeigten eine nur geringe Festigkeit dagegen eine ausgeprägte Tendenz zum Weißbruch bei geringer Belastung. Ebenso erfolglos war der Versuch, elastomere Werkstoffe mit einigermaßen befriedigenden Eigenschaften durch Aufpfropfen von Methylmethacrylat auf praeformiertes Polyethylacrylat zu erhalten. All diese negativen Erfahrungen bei der Pfropfpolymerisation erschienen als durchaus vorprogrammiert angesichts der in der Encyclopedia of Polymer Science & Technology, Vol. 5, loc.cit. pg. 417 auf den Nenner gebrachten Erfahrungen bei Blockpolymeren: "Most polymers are thermodynamically incompatible with other polymers and mixtures separate into two phases. This is true even when the polymeric species are part of the same molecule, as in these block copolymers."

Angesichts dieser Fehlschläge mit den Vertretern der vom Fachmann gemeinhin als gattungstypisch eingeschätzten und untersuchten Monomeren bzw. Polymeren erschien es - wie bereits ausgeführt - einigermaßen aussichtslos auf dem Wege einer einfachen Pfropfung von (Meth)acrylatomonomeren auf Poly(meth)acrylate zu Elastomeren zu kommen, die den Anforderungen der Technik gewachsen sind, indem sie z.B. den Standard erreichen, der mit den aus der EP-A 0 381 065 bekannten Kammpolymeren vorgegeben wurde.

Es wurde nun gefunden, daß überraschenderweise elastomere Acrylharze mit ausgezeichneten mechanischen und optischen Eigenschaften erhalten werden können, wenn man eine Reihe von technischen Regeln einhält, die im folgenden erläutert werden und die in den vorliegenden Ansprüchen ihren Niederschlag finden.

Es wurde nun gefunden, daß überraschenderweise Pfropfpolymerisate PF auf (Meth)acrylatbasis, bei denen ein oder mehrere Pfropfmonomeren PM der Formel (I)

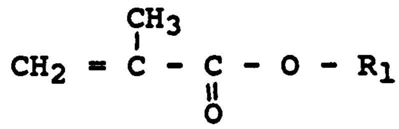

(I)

worin $R_1$ für einen Kohlenwasserstoffrest mit 2 - 24 Kohlenstoffatomen, vorzugsweise 2 - 8 Kohlenstoffatomen und insbesondere für die Gruppen Ethyl, Butyl, Isobutyl und 2-Ethylhexyl steht, auf ein Basis-Polymer BP zu 55 - 100 Gew.-%, insbesondere zu 85 - 100 Gew.-% aufgebaut aus einem oder mehreren Monomeren der Formel (II)

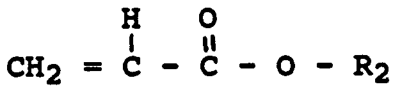

(II)

worin $R_2$ für einen Kohlenwasserstoffrest mit 2 - 24 Kohlenstoffatomen, vorzugsweise 2 - 8 Kohlenstoffatomen und insbesondere für die Gruppen Ethyl, Butyl und 2-Ethylhexyl steht, gepfropft ist, mit der Maßgabe, daß die Gruppen $R_1$ und $R_2$ Van-der-Waals-Volumina aufweisen, die sich um weniger als 30 % unterscheiden, die Anforderungen der Technik besonders gut erfüllen.

Ferner gilt vorteilhafterweise die Bedingung, daß die Mischungswärmen der hydrierten Monomerbausteine der Formel (I-hydr)

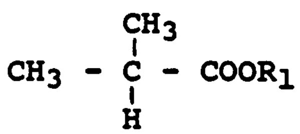

(I-hydr)

und der hydrierten Monomerbausteine der Formel (II-hydr).

$$CH_3 - CH_2 - COOR_2 \qquad \text{(II-hydr)}$$

worin $R_1$ und $R_2$ die oben angegebenen Bedeutungen besitzen, jeweils < 100 cal/Mol Mischung betragen. Vorzugsweise betragen die Abweichungen der Van-der-Waals-Volumina nach Bondi [A. Bondi, J. Phys. Chem. 68, 441 (1964)] weniger als 20 %.

Die Bestimmung der Mischungswärme der hydrierten Monomerbausteine ist im allgemeinen nicht zwingend notwendig, zudem sie sich ohnehin in einer Reihe von Fällen unmittelbar einschlägigen Tabellenwerten entnehmen läßt. Verwiesen sei auf die Monographie "Mischungswärmen von Flüssigkeiten" von W.P. Belousow und A.G. Moratschewski, Verlag Chemie, Leningrad 1970. Definitionsgemäß stehen $R_1$ und $R_2$ in den Formeln (I) bzw. (II) sowie (I-hydr) bzw. (II-hydr) für einen Kohlenwasserstoffrest mit mindestens 2 bis 24 Kohlenstoffatomen, vorzugsweise für einen nichtcyclischen, gegebenenfalls verzweigten Alkylrest, insbesondere mit mindestens 2 und bis zu 8 Kohlenstoffatomen oder einem cyclischen Kohlenwasserstoffrest mit 5 bis 12 Ringgliedern, insbesondere einen alicyclischen Rest, oder einen Phenyl- oder Naphtylrest.

Eine Reihe von geeigneten I/II-Kombinationen kann der DE-OS 37 08 427 entnommen werden. Dort sind Polymermischungen aus Polyacrylaten und Polymethacrylaten beschrieben. Es ist also vorteilhaft, Pfropfpolymere PM aus der Reihe der in DE-OS 37 08 427 genannten Polymethacrylaten auf die mit diesen Polymethacrylaten verträglichen Polyacrylate zu pfropfen.

Weiter sei angegeben, daß die am Aufbau des Basispolymerisats BP beteiligten Monomeren zu den Pfropfmonomeren PM üblicherweise im Gewichtsverhältnis 10 zu 90 bis 90 zu 10, vorzugsweise 90 zu 10 bis 40 zu 60, besonders bevorzugt im Verhältnis 85 zu 15 bis 50 zu 50 stehen.

Außer den Monomeren der Formel (I) können weitere zweckmäßig ausgewählte Monomere PM cogepfropft werden, beispielsweise andere Methacrylsäureester, besonders bevorzugt Methylmethacrylat, das in Anteilen von 0 - 80 Gew.%, bevorzugt in Anteilen von 10 - 60, ganz besonders bevorzugt in Anteilen von 15 bis 40 Gew.-% an den Pfropfmonomeren PM enthalten sein kann. Ebenfalls ist es möglich, Acrylsäureester, z. B. Methylacrylat oder Ethylacrylat in Anteilen von 0,1 - 10 Gew.-%, bevorzugt 0,2 - 5 Gew.-% mitzuverwenden.
Der Anteil an funktionellen Comonomeren wie z.B. Methylolmethacrylamid, Methacrylsäure, Methacrylamid sollte < 5 Gew.-% betragen, bevorzugt enthält die Mischung PM kein Glycidylmethacrylat und kein Maleinsäureanhydrid. Ebenso sollte der Anteil an Styrol, Acrylnitril, Halogen enthaltenden Monomeren an der Mischung PM < 10 Gew.-%, bevorzugt < 1 Gew.-% und ganz besonders bevorzugt 0 Gew.-% betragen. Im allgemeinen liegt das Molgewicht der Basispolymerisate BP (bestimmt durch Viscosimetrie oder Lichtstreuung) im Bereich 200 000 bis 1 000 000 000, vorzugsweise bis 10 000 000. Vorzugsweise sind die Basispolymeren auch nach der Pfropfung nicht vernetzt. Es kann aber durchaus eintreten, daß das ursprünglich hochpolymere, unvernetzte Basispolymere durch das Aufpfropfen der Monomermischung PM geringfügig vernetzt wird (Anteil an Vernetzungspunkten < 0,01 Gew.-% bevorzugt < 0,001 Gew.-%). Ganz besonders bevorzugt sind hochpolymere, unvernetzte Basispolymerisate. Demgegenüber sind die Pfropfäste, d.h. die auf das Basispolymerisat BP aufgepfropfte Pfropfpolymeren wesentlich kürzerkettig. Im allgemeinen beträgt der Molekulargehalt der Pfropfäste 1 000 - 1 000 000 Dalton, bevorzugt 2 000 - 500 000, besonders bevorzugt 5 000 - 200 000. Im allgemeinen werden 10 - 100 Gew.-% (insbesondere 20 - 95 Gew.-%) der Pfropfmonomeren PM auf die Pfropfunterlage gepfropft.

Das Basispolymerisat BP besteht bevorzugt zu 55 - 100 Gew.-%, besonders bevorzugt aus 85 - 100 Gew.-% und ganz besonders bevorzugt zu 91 - 100 Gew.-% aus den Monomeren der Formel II.
Als weitere Monomere kann das Basispolymere in Anteilen von ≦ 45 Gew.%, bevorzugt in Anteilen < 15 und ganz besonders bevorzugt in Anteilen < 9 Gew.-% und bis 0,1 Gew.-% andere mit Acrylsäureestern copolymerisierbaren Monomeren enthalten; hier sind insbesondere Methacrylsäureester zu nennen. Danach ist bevorzugt von Mischungen aus 2 verschiedenen Monomeren der Formel II auszugehen. Das Basispolymere kann in Anteilen von bis zu 25 Gew.-%, bevorzugt < 15 Gew.-% Styrol enthalten. Besonders Interesse verdienen gegebenenfalls substituierte Phenyl(alkyl)acrylate, wie beispielsweise Benzylacrylat oder Phenylpropylacrylat, die in Anteilen von 0 - 30 Gew.-% enthalten sein können. Auch Methylacrylat kann in Anteilen bis zu 45 Gew.-% zum Aufbau des Basispolymeren BP copolymerisiert werden.

Anteile von hydrophilen Monomeren wie beispielsweise Hydroxyalkylacrylat oder Methacrylsäure können in Anteilen von 0 - 5 Gew.-%, bevorzugt in Anteilen von 0 - 3, ganz besonders bevorzugt in Anteilen von 0,1 - 0,5 Gew.-% einpolymerisiert werden.
Nicht copolymerisiert werden sollen Butadiene oder Isoprene, deren Gehalt am Basispolymeren < 5 Gew.-% betragen soll, besonders bevorzugt sind solche Basispolymeren, die weder Butadien noch Isopren enthalten. Ebenfalls nicht verwendet werden sollen zum Aufbau des Polymeren BP mehrfunktionelle Methacrylsäureester wie Butandioldimethacrylat oder mehrfunktionelle Acrylsäureester wie Hexandioldiacrylat. Deren Gehalt ist auf < 0,01 Gew.-% am Basispolymeren BP zu beschränken. Propfaktive Monomeren wie Allyl(meth)acrylate oder Vinyl(meth)acrylate, z.B. Allylacrylat können dagegen in Anteilen bis zu 1 Gew.-% (bevorzugt in Anteilen bis zu 0,3, besonders bevorzugt bis zu 0,2, ganz besonders bevorzugt bis zu 0,09 Gew.-%) enthalten sein.

Besonders bei hohen Anteilen an pfropfaktiven Monomeren müssen Polymerisationsregler wie Mercaptane z.B. 2-Ethylhexylthioglykolat mitverwendet werden (in Anteilen < 0,5 Gew.-%), um ein Vernetzen der Acrylatpolymeren zu vermeiden.

Als paradigmatisch für die vorliegende Erfindung seien im folgenden Basispolymerisate BP, in denen $R_2$ in Formel II für Ethyl steht (Polyethylacrylat) und Pfropfmonomere PM der Formel (I) in denen $R_1$ für Ethyl steht (Ethylmethacrylat), angeführt.
Man erhält in diesem Falle beispielsweise durch einfache Zulaufpolymerisation Polyethylacrylat-Polyethylmethacrylat-Pfropfpolymere, die bei Raumtemperatur glasklare, zähe Kunststoff-Filme bilden. Ebenso werden gute Ergebnisse erhalten, wenn $R_2$ = n-Butyl und $R_1$ = Isobutyl ist.

Herstellung der Polymerisate PF

Im Prinzip eignen sich die einschlägig verwendeten Polymerisationsverfahren des Standes der Technik (vgl. H. Rauch-Puntigam, Th. Völker, Acryl- und Methacrylverbindungen, Springer Verlag 1967; H. F. Mark et al. Encyclopedia loc.cit.) zur Herstellung der Polymeren, wobei bei der Herstellung der Basispolymerisate BP vorteilhaft Bedingungen angewendet werden, welche die Vernetzung nicht begünstigen. In der Regel bedient man sich der radikalischen Polymerisation unter Verwendung der üblichen Radkalinitiatoren.

In aller Regel wird man zunächst das Basispolymere BP herstellen und dieses in Lösungsmitteln, die eine geringe Übertragungsneigung aufweisen, z.B. Butylacetat, bei möglichst hoher Temperatur z.B. 120 Grad C mit den Pfropfpolymeren PM pfropfen. Besonderes Interesse verdient die Pfropfung der hochmolekularen Basispolymeren direkt in der Schmelze ohne Lösungsmittel im Extruder oder einen Druckreaktor bei Temperaturen von 150 bis 200 Grad C. Dabei

wird bevorzugt das BP zunächst in Lösungsmittel hergestellt oder in Substanz nur bis zu einen geringen Umsatz polymerisiert, entgast und anschließend mit den Monomeren PM gepfropft. Zur Erreichung gut handhabbarer BP ist dessen MW gegebenenfalls unter Zugabe von Reglern auf Molekulargewichte < 1 000 000 zu begrenzen.
Dabei ist vor allem die Herstellung im Emulsionspolymerisationsverfahren in wäßrigem Milieu technisch bedeutsam. Als Initiatoren kommen die dafür üblichen, insbesondere Persulfate wie z.B. Kalium- oder Ammoniumperoxidisulfat in Mengen von gewöhnlich 0,001 bis 0,5 Gew.-% bezogen auf die Monomeren infrage, gegebenenfalls auch ein Redoxsystem (vgl. Rauch-Puntigam loc.cit. S. 221 - 229). Während die Anwendung gut pfropfbarer Monomeren im Basispolymerisat BP Vorteile bringt, hat es sich als ungünstig erwiesen, die Pfropfung durch einen hohen Initiatorzusatz zu forcieren. Diese Maßnahme führt zu thermostabilen Polymeren.
Als Emulgatoren dienen ebenfalls die an sich bekannten, insbesondere anionogene wie die Alkalisalze von Paraffinsulfonaten, normalerweise in Mengen von 0,5 - 5 Gew.-% (bezogen auf die Wassermenge).

Von besonderem Interesse ist die Herstellung der Pfropfpolymeren in einem zweistufigen Emulsionspolymerisationsverfahren, wobei die erste Stufe, die Herstellung der Basispolymerisate BP vorteilhaft als Batchpolymerisation durchgeführt wird. Auf diesem Wege gelingt es in besonders einfacher Weise z.B. nicht-vernetzte Polyacrylate mit einem erwünscht hohen Molekulargewicht (beispielsweise J = 200 - 1 000 ml/g; bestimmt nach ISO 1628-6) zu gewinnen.
Zweckmäßig schließt sich unmittelbar daran die Pfropfung vorzugsweise in Form einer Zulaufpolymerisation der Pfropfmonomeren PM an. Vorteilhaft wird dieser Schritt bei Temperaturen um 70 - 100 Grad C durchgeführt.
Dabei kann im einzelnen wie folgt verfahren werden:
Zunächst stellt man a) unter Zugabe der Emulgatoren und der Initiatoren eine wäßrige Emulsion der Monomeren her, wobei als Anhalt ein Mengenverhältnis Monomer zu Wasser wie ca. 1 : 2 gelten kann.
Vorteilhaft kann dabei so vorgegangen werden, daß zunächst nur der peroxidische Partner des Redox-Initiatorsystems zugesetzt wird. Anschließend erwärmt man zweckmäßig unter einem inerten Schutzgas wie beispielsweise Stickstoff/Argon auf eine geeignete Temperatur beispielsweise 35 ± 10 Grad C und unter Zugabe des reduzierenden Partners des Redoxsystems. Gewöhnlich steigt die Temperatur binnen kurzer Zeit, als Anhalt seien ca. 10 Minuten genannt, stark an, beispielsweise auf ca. 85 ± 5 Grad C. Daraufhin werden b) die Pfropfmonomeren PM vorzugsweise durch Eintropfen zugegeben, in der Regel innerhalb ca. 15 - 90 Minuten. Anschließend wird unter Erwärmen, beispielsweise indem man die Temperatur bei ca. 80 Grad C hält, die Endpolymerisation durchgeführt.
Man erhält gewöhnlich das Pfropfpolymerisat in Form einer stabilen Dispersion, die direkt oder nach Zugabe von z.B. Ammoniak zu einem zähen, elastischen Film aufgetrocknet werden kann. Der Restmonomerengehalt liegt gewöhnlich im ppm-Bereich.

Vorteilhafte Wirkungen

Zunächst mußte die einfache Herstellbarkeit der erfindungsgemäßen Pfropfpolymerisate PF auf's äußerste überraschen, schien jedoch ein regulärer Verlauf der Pfropfpolymerisation infolge der zu erwartenden Inkompatiblität der unmittelbar gebildeten Produkte von vorneherein nicht wahrscheinlich.
Als mindestens genauso unerwartet muß die hohe Qualität der erfindungsgemäß zugänglich gemachten Produktklasse eingestuft werden.
Von besonderem Interesse sind die erfindungsgemäßen Polymerisate, die durch einfaches Auftrocknen der Dispersion als hochelastische Filme oder Folien erhalten werden können. Filme oder Folien auf der Basis dieser Pfropfpolymerisate zeigen einen überraschend hohen Blockpunkt, sehr gute Kohäsion, einen trockenen Griff, eine hohe Reißdehnung und hohe Reißfestigkeit.
Die Pfropfpolymeren können glasklar hergestellt werden. Sofern das Molekulargewicht < 2 000 000 Dalton eingestellt wird, sind die Filme bzw. Folien thermoformbar. Die Polymeren können durch Pressen, Extrusion oder Spritzgießen verarbeitet werden. Im Unterschied zu einem vulkanisierten Gummi sind dies Pfropfpolymeren als TPE 100 % recyclisierbar.
Besonderes Interesse verdient die gute Tieftemperaturzähigkeit dieser Materialien und die gute Wärmeformbeständigkeit.
Überraschenderweise sind diese Pfropfpolymeren als Pulver oder Granulate handhabbar, auch wenn der Anteil des PM am Gesamtpfropfpolymeren nur 30 Gew.-% beträgt.
Die Pfropfpolymeren eignen sich hervorragend für hochelastische Beschichtungen als Schmelzkleber und sie sind verschweißbar.
Besonderes Interesse verdient der Umstand, daß Pfropfpolymere auf Basis der Monomeren I und II als Emulsionspolymerisate bereits bei Raumtemperatur filmbildend sind, dabei aber bei bis zu ca. 50 Grad C blockfest.
Die hohe mechanische Festigkeit der Pfropfpolymeren ergibt sich allerdings erst nach Erwärmen über die Tg des Pfropfpolymeren PM. Dies verleiht den Polymeren besonders als siegelfähige Polymerisate technische Bedeutung.

Die folgenden Beispiele dienen zur Erläuterung der Erfindung:
Dabei fanden folgende analytische Methoden Anwendung:

Bestimmung der
Grenzviskosität J (ml/g) nach ISO 1628-6

| | |
|---|---|
| Reißfestigkeit $\sigma_R$ | (Im Zugversuch nach DIN 53 455 bzw. ISO/R527) |
| Reißdehnung $\varepsilon_R$ | (Im Zugversuch nach DIN 53 455) |

BEISPIELE

Herstellung der Pfropfpolymeren PF

Beispiel 1.

Pfropfpolymere mit Polyethylacrylat als Basispolymer und Ethylmethacrylat als Pfropfmonomer. Eine Emulsion aus:

| | |
|---|---|
| 600,0 g | Wasser |
| 300,0 g | Ethylacrylat |
| 0,6 g | Methacrylsäure |
| 3,0 g | Na-Salz eines C15-Paraffinsulfonats |
| 0,5 g | Ammoniumperoxidisulfat |
| 2,0 mg | $FeSO_4$ |

wird auf 35 Grad C erwärmt und unter Inertgas mit 0,3 g $Na_2SO_5$ versetzt. Die Temperatur steigt innerhalb von 11 Minuten auf 86 Grad C, sofort anschließend werden 130 g Ethylmethacrylat innerhalb von 15 Minuten zugetropft. Zur Endpolymerisation wird noch 30 Minuten bei ca. 80 Grad C gerührt, danach wird abgekühlt. Man erhält eine stabile Dispersion, die direkt oder nach Zugabe von Ammoniak zu einem zähen, elastischen Film aufgetrocknet werden kann.

Analysedaten:

| | |
|---|---|
| Restmonomergehalt : | 32 ppm Ethylacrylat, 315 ppm Ethylmethacrylat |
| J-Wert (Polyethylacrylat vor der Pfropfung) : | 615 ml/g |
| J-Wert (Endprodukt) : | 601 ml/g |

Nach Trocknung in einem Umluftschrank (70 Grad C) wird ein transparenter Film erhalten, der einen wachsartigen Griff aufweist. Zur weiteren Charakterisierung siehe Abb. 1 (Zugversuch DIN 53455)

$$\sigma_R = 8,36 \text{ MPa}$$

$$\varepsilon_R = 895 \text{ \%}$$

Weitere Eigenschaften: der Film ist auch bei -15 Grad C außerordentlich zäh und zeigt hohe Kohäsion.

Beispiel 2:

Man wiederholt den Versuch gemäß Beispiel 1, wählt jedoch eine etwas andere Zusammensetzung der Monomeren des Basispolymerisats:

| | |
|---|---|
| 300,0 g | Ethylacrylat |
| 0,6 g | Allylmethacrylat |

(Anstelle von Methacrylsäure)

Man erhält ein Emulsionspolymerisat, das zu einer 0,5 mm dicken Folie getrocknet wird (Zugversuch siehe Abb. 2)

$$\sigma_R = 10,0 \text{ MPa}$$

$$\varepsilon_R = 697 \text{ \%}$$

Das Material zeigt auch bei erhöhten Temperaturen (z.B. 100 Grad C) keinerlei Klebrigkeit, kann jedoch mit einem handelsüblichen Folienschweißgerät verschweißt werden (kein Anhaften am Gerät).

Beispiel 3 (Vergleichsversuch)

Man polymerisiert 300 g Butylacrylat anstelle von Ethylacrylat in ansonsten völliger Analogie zu Beispiel 1 und pfropft 130 g Methylmethacrylat. Man erhält einen weißen, klebrigen Film, der bei der geringsten Belastung Weißbruch zeigt.

Beispiel 4 (Vergleichsversuch)

Man stellt eine Mischung aus 70 Gew.-% einer Polyethylacrylat-Dispersion und 30 Gew.-% einer Polyethylmethacrylat-Dispersion her (die Dispersionen wurden getrennt von einander hergestellt) und gießt einen Film aus. Der resultierende Film ist klar, ist zwar äußerst dehnbar, besitzt jedoch keine Festigkeit (Siehe Abb. 3). Ferner zeigt dieser zunächst klare Film bei der geringsten Dehnung Weißbruch.

Beispiel 5 (Vergleichsversuch)

30 Teile Ethylmethacrylat und 70 Teile Ethylacrylat werden direkt als Batch copolymerisiert. Man erhält einen klebrigen Film von geringer mechanischer Festigkeit (siehe Abb. 4).

Beispiel 6 (Bestimmung des Blockens)

Analog Beispiel 1 wird eine Dispersion hergestellt, wobei die Vorlage 70 Gew.-% eines Copolymerisats aus Ethylacrylat, Methacrylsäure und Allylmethacrylat im Gew.-Verhältnis 99,8 : 0,1 : 0,1 enthält und im Zulauf 30 Gew.-Teile Ethylmethacrylat gepfropft werden. Die dabei erhaltene Dispersion wird mit Ammoniak neutralisiert, anschließend wird saugfähiges Papier N30 beschichtet (Raumtemperatur). Nach Trocknung (3 Stunden, 60 Grad C) wird das zusammengefaltete Papier mit 50 g/cm$^2$ belastet und das Blocken bestimmt.

| | |
|---|---|
| RT → 50 Grad C: Note I : | einfaches Auseinanderziehen des Papiers möglich |
| 60 Grad C: Note III: | Zerstörung des Papiers beim Auseinanderreißen. |

Beispiel 7 Mindestfilmbildetemperatur (MFT):

Die gemäß Beispiel 6 erhaltene Dispersion bildet bis hinab zu 0 Grad C glasklare Filme. Die Festigkeit der bei tiefen Temperaturen erhaltene Filme kann durch kurzes Tempern auf beispielsweise 70 Grad C deutlich erhöht werden.

Beispiel 8 (Isolierung der Polymerisatfeststoffe):

Außer durch einfaches Eintrocknen der Dispersion kann das Polymerisat auch durch Gefrierkoagulation und nachfolgender Trocknung bei ca. 50 Grad C gewonnen werden. Trotz einer MFT 0 Grad C ist das Polymerisat nicht klebrig.

Für folgende Abbildungen 1 - 4 gelten die folgenden Legenden:

| **Abb.1** Zugversuch DIN 53 455 an Proben gemäß Beispiel 1. | |
|---|---|
| Prüfgeschwindigkeit 1 für E-Modul | 1,0 mm/min |
| Prüfgeschwindigkeit 2 ab 1,00 % | 50,0 mm/min |
| Messlänge | 50,0 mm |
| Probenbreite BO: 15 mm, Probendicke: 0,47 mm (Mittelwert) | |

| **Abb.2** Zugversuch DIN 53 455 an Proben gemäß Beispiel 2. | |
|---|---|
| Prüfgeschwindigkeit 1 für E-Modul | 1,0 mm/min |
| Prüfgeschwindigkeit 2 ab 1,00 % | 50,0 mm/min |
| Messlänge | 50,0 mm |
| Probenbreite BO: 15 mm, Probendicke: 0,488 mm (Mittelwert) | |

| **Abb.3** Zugversuch DIN 53 455 an einer Probe gemäß Beispiel 4. | |
|---|---|
| Prüfgeschwindigkeit 1 für E-Modul | 1,0 mm/min |
| Prüfgeschwindigkeit 2 ab 1,00 % | 50,0 mm/min |
| Messlänge | 50,0 mm |
| Probenbreite BO: 15 mm, Probendicke: 0,56 mm | |

| **Abb.4** Zugversuch DIN 53 455 an Proben gemäß Beispiel 5. | |
|---|---|
| Prüfgeschwindigkeit 1 für E-Modul | 1,0 mm/min |
| Prüfgeschwindigkeit 2 ab 1,00 % | 50,0 mm/min |
| Messlänge | 50,0 mm |
| Probenbreite BO: 15 mm, Probendicke: 0,40 mm (Mittelwert) $\sigma_R$ = 1,73 mPa (Mittelwert), $\varepsilon_R$ = 784 % (Mittelwert) | |

## Patentansprüche

1. Pfropfpolymerisate auf Basis von Acrylsäureestern und Methacrylsäureestern,
   dadurch gekennzeichnet,
   daß ein oder mehrere Pfropfmonomeren PM der Formel (I)

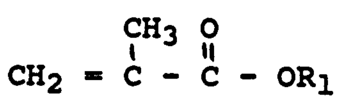

(I)

worin $R_1$ für einen Kohlenwasserstoffrest mit 2 bis 24 Kohlenstoffatomen steht, auf ein Basis-Polymer BP zu 55 bis 100 Gew.-% aufgebaut aus einem oder mehreren Monomeren der Formel (II)

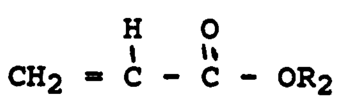

(II)

worin $R_2$ für einen Kohlenwasserstoffrest mit 2 bis 24 Kohlenstoffatomen steht,
gepfropft werden, mit der Maßgabe, daß die Gruppen $R_1$ und $R_2$ Van-der-Waals-Volumina aufweisen, die sich um weniger als 30 % unterscheiden, und daß mindestens 10 Gew.-% bezogen auf die Gesamtmonomeren der Formel (I) auf das Basispolymerisat BP aufgepfropft sind.

**2.** Pfropfpolymerisate gemäß Anspruch 1, dadurch gekennzeichnet, daß die Basispolymerisate BP außer den Monomeren der Formel (II) noch 45 bis 0,1 Gew.-% eines oder mehrerer von (II) verschiedenen, mit Acrylsäureestern copolymerisierbare Monomeren enthalten.

**3.** Pfropfpolymerisate gemäß den Ansprüchen 1 und 2, dadurch gekennzeichnet, daß die am Aufbau des Basispolymerisats BP beteiligten Monomeren zu den Pfropfmonomeren PM im Gewichtsverhältnis 10 zu 90 bis 90 zu 10 stehen.

**4.** Pfropfpolymerisate gemäß den Ansprüchen 1 - 3 dadurch gekennzeichnet, daß das Molekulargewicht des Basispolymerisats BP im Bereich 200 000 bis $10^9$ Dalton liegt.

**5.** Pfropfpolymerisate gemäß den Ansprüchen 1 - 4, dadurch gekennzeichnet, daß das Basispolymerisat zu 85 - 100 Gew.-% aus Monomeren der Formel (II) aufgebaut ist.

**6.** Pfropfpolymerisate gemäß den Ansprüchen 1 - 5, dadurch gekennzeichnet, daß $R_1$ und $R_2$ für Ethyl steht.

**7.** Pfropfpolymerisate gemäß den Ansprüchen 1 - 5, dadurch gekennzeichnet, daß $R_1$ für Isobutyl und $R_2$ für n-Butyl steht.

**8.** Pfropfpolymerisate gemäß den Ansprüchen 1 - 7 hergestellt durch Emulsionspolymerisation.

**9.** Verfahren zur Herstellung von Pfropfpolymerisaten gemäß den Ansprüchen 1- 8 in Emulsionspolymerisation, dadurch gekennzeichnet, daß man a) mit Hilfe an sich bekannter Emulgatoren eine wäßrige Emulsion enthaltend Monomere der Formel (II)

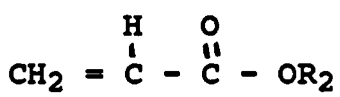

(II)

worin $R_2$ für einen Kohlenwasserstoff mit 2 bis 24 Kohlenstoffatomen steht, bildet und diese mittels an sich bekannter Radikalinitiatoren bei erhöhter Temperatur zum Basispolymerisat BP polymerisiert und b) anschließend bei erhöhter Temperatur die Pfropfmonomeren PM der Formel (I)

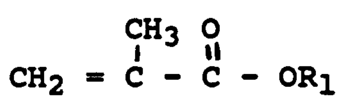

(I)

worin $R_2$ für einen Kohlenwasserstoffrest mit 2 bis 24 Kohlenstoffatomen steht, mit der Maßgabe, daß die Gruppen $R_1$ und $R_2$ Van-der-Waals-Volumina aufweisen, die sich um weniger als 30 % unterscheiden, zusetzt und pfropfpolymerisiert.

**10.** Verfahren gemäß Anspruch 9, dadurch gekennzeichnet, daß man die Polymerisation in Stufe a) als Batchpolymerisation und die Stufe b) als Zulaufpolymerisation durchführt.

**11.** Verfahren zur Herstellung von Pfropfpolymerisaten gemäß den Ansprüchen 1- 7, dadurch gekennzeichnet, daß die Pfropfpolymerisation der Pfropfmonomern PM der Formel (I) auf das Basispolymerisat BP im Extruder vorgenommen wird.

**12.** Dispersion der Pfropfpolymerisate gemäß den Ansprüchen 1, hergestellt nach dem Verfahren gemäß den Ansprüchen 9 - 10.

**13.** Formkörper, hergestellt aus den Pfropfpolymeren gemäß Anspruch 1.

**14.** Gießfolien, hergestellt aus den Polymer-Dispersionen gemäß Anspruch 12.

## Claims

1. Graft polymers based on acrylic acid esters and methacrylic acid esters, characterised in that one or several graft monomers PM of formula (I)

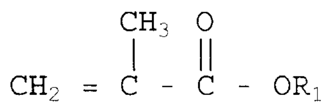

(I)

wherein $R_1$ is a hydrocarbon group having 2 to 24 carbon atoms, are grafted onto a base polymer BP which is synthesised in an amount of 55 to 100 wt.%, from one or several monomers of formula (II)

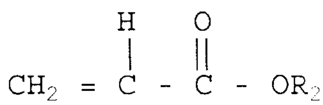

(II)

wherein $R_2$ is a hydrocarbon group having 2 to 24 carbon atoms, with the proviso that the groups $R_1$ and $R_2$ have Van-der-Waals volumes which differ by less than 30%, and that at least 10 wt.% based on the total monomers of formula I are grafted onto the base polymer BP.

2. Graft polymers according to Claim 1, characterised in that the base polymers BP in addition to the monomers of formula (II), also comprise 45 to 0.1 wt.% of one or more monomers different from (II) and copolymerisable with acrylic acid esters.

3. Graft polymers according to Claims 1 and 2, in that the monomers which make up the base polymer BP are in a weight ratio to the graft polymers PM of 10 to 90 up to 90 to 10.

4. Graft polymers according to Claims 1 to 3, characterised in that the molecular weight of the base polymer BP is within the range of 200,000 to $10^9$ Daltons.

5. Graft polymers according to Claims 1 to 4, characterised in that the base polymer is synthesised from 85 to 100 wt.% of monomers of formula (II).

6. Graft polymers according to Claims 1 to 5, characterised in that $R_1$ and $R_2$ are ethyl.

7. Graft polymers according to Claims 1 to 5, characterised in that $R_1$ is isobutyl and $R_2$ is n-butyl.

8. Graft polymers according to Claims 1 to 7, prepared by emulsion polymerisation.

9. A process for preparing graft polymers according to Claims 1 to 8 by emulsion polymerisation, characterised in that a) by means of emulsifiers known per se, an aqueous emulsion is formed, comprising monomers of formula (II)

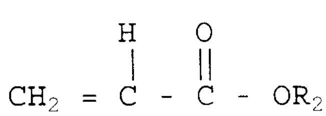

(II)

wherein $R_2$ is a hydrocarbon having 2 to 24 carbon atoms, and that these monomers are polymerised by means of radical initiators known per se, at an elevated temperature to form the base polymer BP, and b) at an elevated temperature, the graft monomers PM of formula (I)

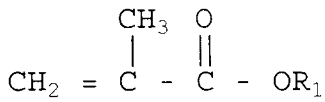

(I)

wherein $R_2$ is a hydrocarbon group having 2 to 24 carbon atoms, with the proviso that the groups $R_1$ and $R_2$ have Van-der-Waals volumes which differ by less than 30% are then added and graft polymerised.

**10.** A process according to Claim 9, characterised in that the polymerisation in stage a) is carried out as a batch polymerisation and in stage b) as a feed polymerisation.

**11.** A process for preparing graft polymers according to Claims 1 to 7, characterised in that the graft polymerisation of the graft monomers PM of formula (I) onto the base polymers BP is carried out in the extruder.

**12.** A dispersion of the graft polymers according to Claims 1, prepared by the process according to Claims 9 to 10.

**13.** Moulded articles prepared from the graft polymers according to Claim 1.

**14.** Cast films prepared from the polymer dispersions according to Claim 12.

**Revendications**

**1.** Polymères greffés à base d'esters d'acide acrylique et d'esters d'acide méthacrylique, caractérises en ce qu'un ou plusieurs monomères greffants PM de formule (I)

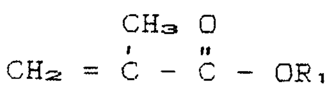

(I)

dans laquelle $R_1$ est mis pour un reste hydrocarboné à 2-24 atomes de carbone, sont greffés sur un polymère de base BP composé, pour 55 à 100% en poids, d'un ou de plusieurs monomères de formule (II)

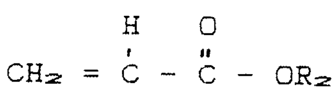

(II)

dans laquelle $R_2$ est mis pour un reste hydrocarboné à 2-24 atomes de carbone, étant spécifie que les groupements $R_1$ et $R_2$ présentent des volumes de Van der Waals qui se différencient de moins de 30%, et en ce qu'au moins 10% en poids, par rapport aux monomères totaux de formule (I), sont greffés sur le polymère de base BP.

**2.** Polymères greffés selon la revendication 1, caractérisés en ce que les polymères de base BP contiennent, en plus des monomères de formule (II), encore 45 à 0,1% en poids d'un ou de plusieurs monomères différents de (II), copolymérisables avec des esters d'acide acrylique.

**3.** Polymères greffés selon la revendication 1 ou 2, caractérisés en ce que les monomères participant à la constitution du polymère de base BP sont, aux monomères greffants PM, dans un rapport pondéral de 10:90 à 90:10.

**4.** Polymères greffés selon l'une quelconque des revendications 1 à 3, caractérisés en ce que le poids moléculaire du polymère de base BP se situe dans la gamme de 200 000 à $10^9$ daltons.

**5.** Polymères greffés selon l'une quelconque des revendications 1 à 4, caractérisés en ce que le polymère de base est composé, pour 85 à 100% en poids, de monomères de formule (II).

**6.** Polymères greffés selon l'une quelconque des revendications 1 à 5, caractérisés en ce que $R_1$ et $R_2$ sont mis pour des groupements éthyle.

**7.** Polymères greffés selon l'une quelconque des revendications 1 à 5, caractérisés en ce que $R_1$ est mis pour un groupement isobutyle et $R_2$ pour un groupement n-butyle.

**8.** Polymères greffés selon l'une quelconque des revendications 1 à 7, préparés par polymérisation en émulsion.

**9.** Procédé de préparation de polymères greffés selon l'une quelconque des revendications 1 à 8 par polymérisation en émulsion, caractérisé en ce que

a) on forme, à l'aide d'émulsifiants en soi connus, une émulsion aqueuse contenant des monomères de formule II

$$CH_2 = \overset{\overset{H}{|}}{C} - \overset{\overset{O}{\|}}{C} - OR_2 \qquad (II)$$

dans laquelle $R_2$ est mis pour un reste hydrocarboné à 2-24 atomes de carbone, et on la polymérise au moyen d'amorceurs radicalaires en soi connus, à température élevée, pour obtenir le polymère de base BP, et
b) on ajoute ensuite et on polymérise par greffage, à température élevée, les monomères greffants PM de formule (I)

$$CH_2 = \overset{\overset{CH_3}{|}}{C} - \overset{\overset{O}{\|}}{C} - OR_1 \qquad (I)$$

dans laquelle $R_1$ est mis pour un reste hydrocarboné à 2-24 atomes de carbone, étant spécifié que les groupements $R_1$ et $R_2$ présentent des volumes de Van der Waals qui se différencient de moins de 30%.

**10.** Procédé selon la revendication 9, caractérisé en ce que l'on conduit la polymérisation sous forme de polymérisation par charges successives dans l'étape a) et sous forme de polymérisation par apport de monomères dans l'étape b).

**11.** Procédé de préparation de polymères greffés selon l'une quelconque des revendications 1 à 7, caractérisé en ce que la polymérisation par greffage des monomères greffants PM de formule (I) sur le polymère de base BP est effectuée dans l'extrudeuse.

**12.** Dispersion des polymères greffés selon l'une quelconque des revendications 1 à 8, préparés par le procédé selon la revendication 9 ou 10.

**13.** Corps moulés, fabriqués à partir des polymères greffés selon la revendication 1.

**14.** Feuilles coulées, fabriquées à partir des dispersions de polymère selon la revendication 12.

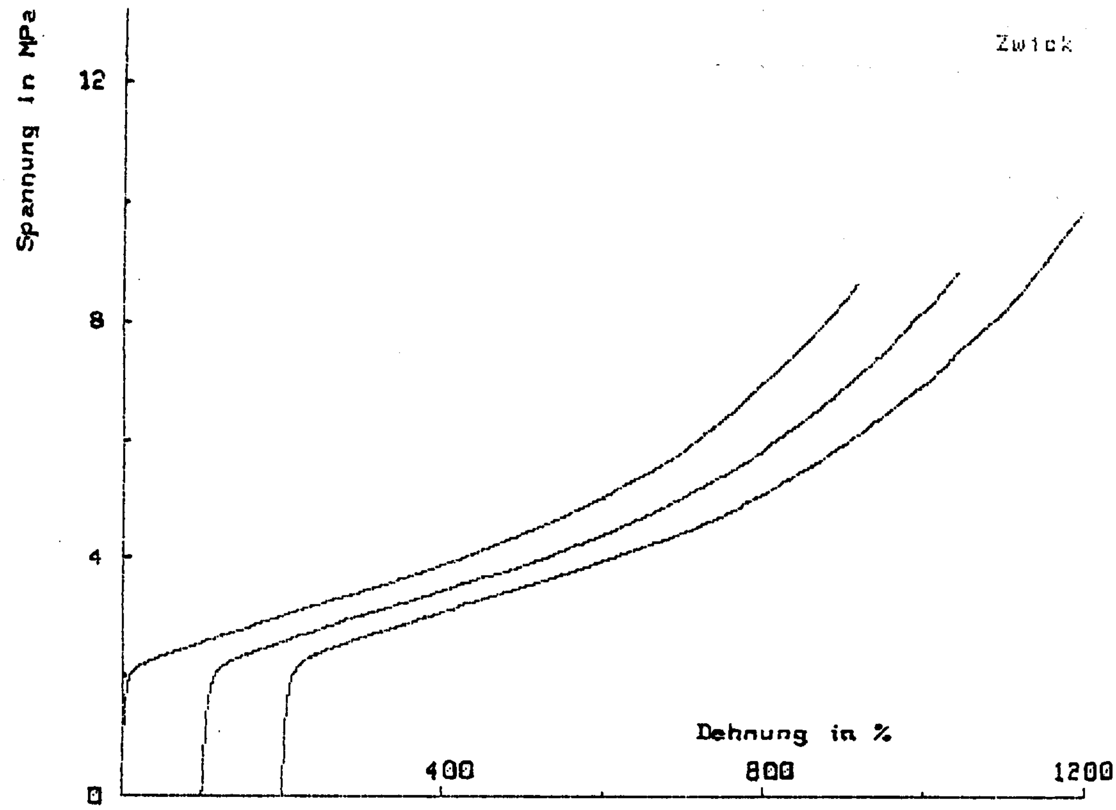
Spannung in MPa
12
8
4
0
Zwick
Dehnung in %
400
800
1200

Abb. 1

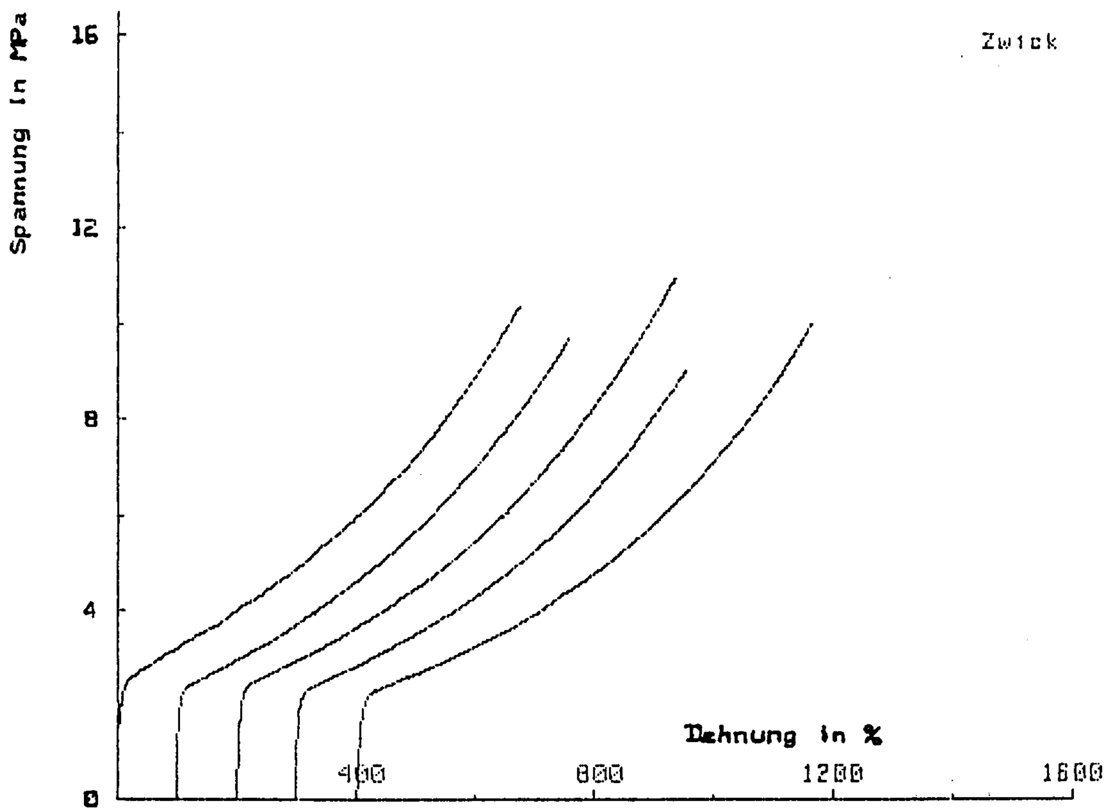
Spannung in MPa
16
12
8
4
0
Zwick
Dehnung in %
400
800
1200
1600

Abb. 2

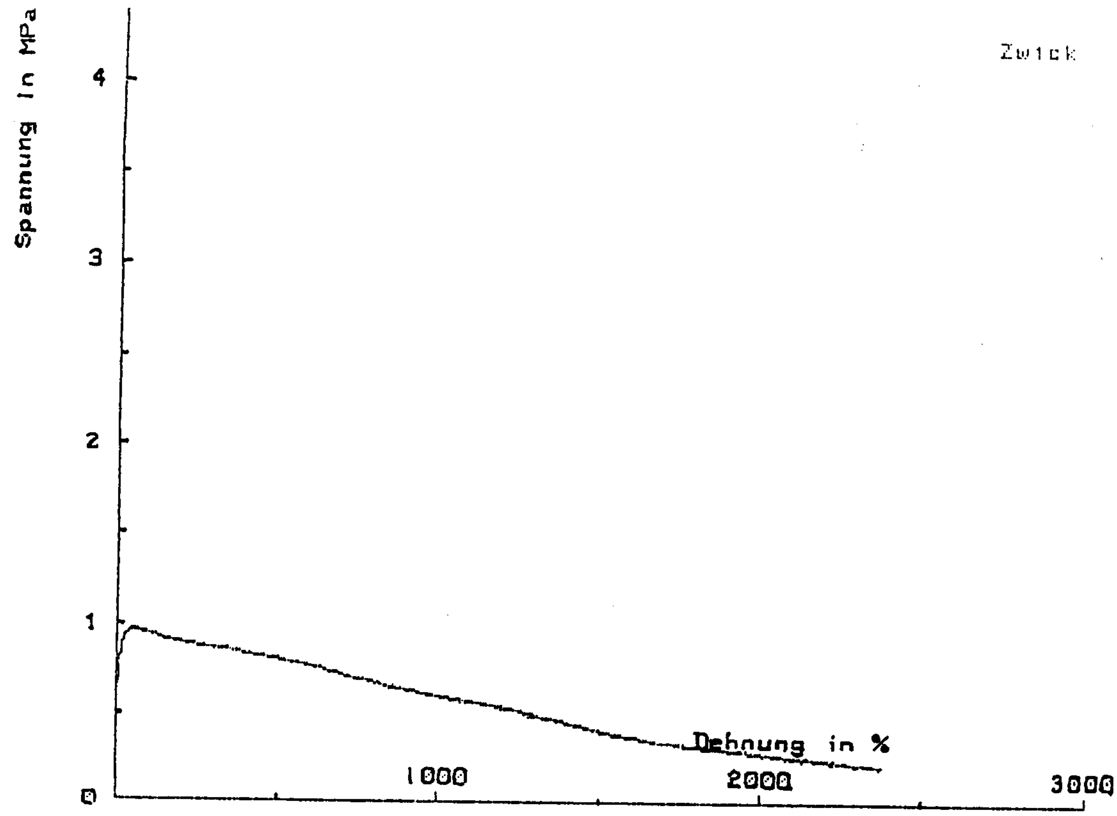
Spannung in MPa
Zwick
4
3
2
1
0
Dehnung in %
1000
2000
3000

Abb. 3

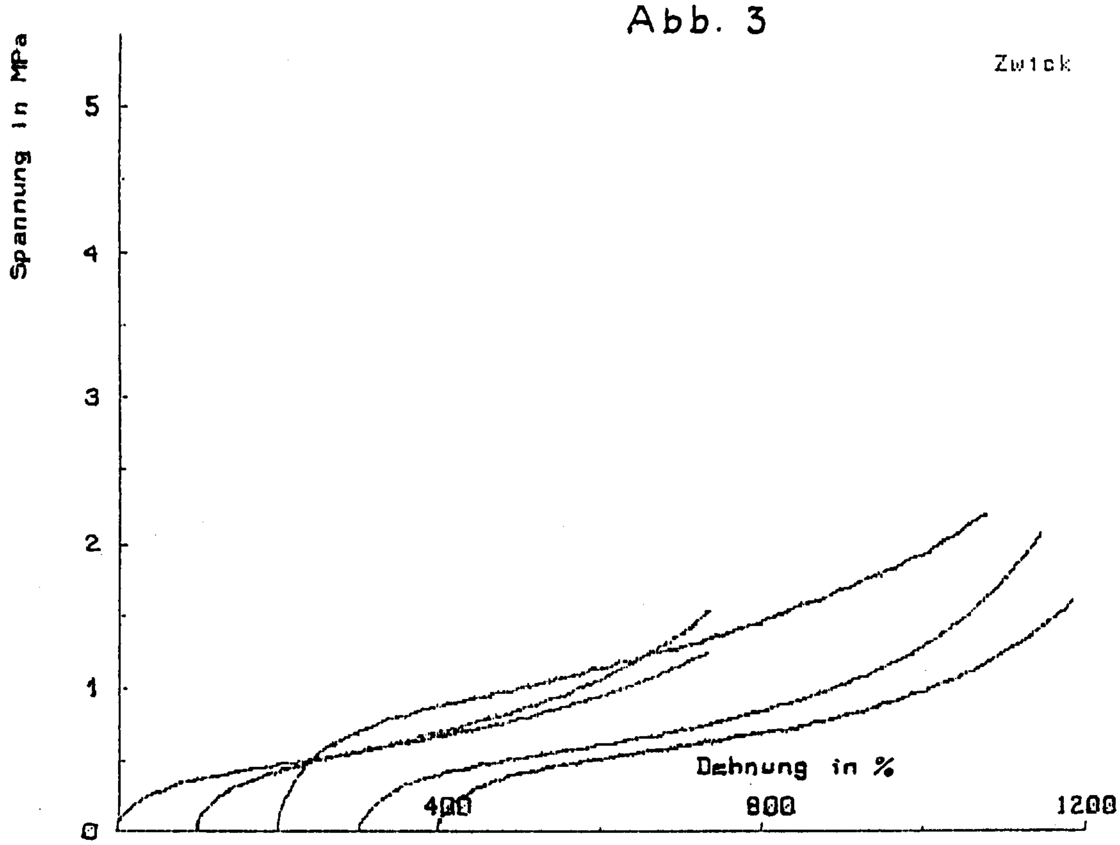
Spannung in MPa
Zwick
5
4
3
2
1
0
Dehnung in %
400
800
1200

Abb. 4